(19) Europäisches Patentamt
European Patent Office
Office européen des brevets

(11) **EP 3 282 387 A1**

(12) **EUROPEAN PATENT APPLICATION**

(43) Date of publication:
**14.02.2018 Bulletin 2018/07**

(51) Int Cl.:
***G06K 9/00*** (2006.01)

(21) Application number: **17176575.3**

(22) Date of filing: **19.06.2017**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD**<br><br>(30) Priority: **10.08.2016   CN 201610652044** | (71) Applicant: **Fujitsu Limited**<br>**Kawasaki-shi, Kanagawa 211-8588 (JP)**<br><br>(72) Inventor: **Bai, Xianghui**<br>**Beijing, 100027 (CN)**<br><br>(74) Representative: **Hoffmann Eitle**<br>**Patent- und Rechtsanwälte PartmbB**<br>**Arabellastraße 30**<br>**81925 München (DE)** |

(54) **FIRE DETECTION METHOD, FIRE DETECTION APPARATUS AND ELECTRONIC EQUIPMENT**

(57)   Embodiments of this disclosure provide a fire detection method, a fire detection apparatus and electronic equipment. The fire detection apparatus includes: a first extracting unit configured to extract at least one group of fire candidate regions from a predetermined number of consecutive frames of surveillance images; a first calculating unit configured to calculate variance of directivity angles of a predetermined vector, variance of amplitudes of the predetermined vector and variance of Hu moments of the fire candidate regions; wherein, the predetermined vector is a vector connecting a position of a center of mass and a position of a highest point in each fire candidate region; and a first judging unit configured to judge whether each group of fire candidate regions is regions where fires occur according to the variance of directivity angles of the predetermined vector, the variance of amplitudes of the predetermined vector and the variance of Hu moments. With these embodiments, fires may be detected accurately at nights, and influence of such factors as lamp light may be avoided.

**FIG.1**

EP 3 282 387 A1

**Description**

Technical Field

This disclosure relates to the field of information technologies, and in particular to a fire detection method, a fire detection apparatus and electronic equipment.

Background

Detection of fires is an important condition for preventing and controlling fires. For an indoor environment, fires may be detected by using a smoke detector, a temperature detector and/or a light detector. And for an outdoor environment, fires may be detected based on video surveillance images.

In the relevant art, a method for detecting a fire based on video surveillance images include, for example, detecting a fire based on a method of color clustering analysis, detecting a fire based on such features as a first texture, and detecting a fire by recognizing a color and edge information in an image by using a neural network, etc.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

It was found by the inventor of this disclosure that the existing method for detecting a fire based on a video surveillance image is hard to perform accurate fire detection at nights, because a visibility is poor at night, and accurate color information, and texture information, etc., are hard to be acquired. Hence, performing fire detection based on color information, and texture information, etc., is relatively difficult, and such factors as lamp light at night will also pose large interference on the fire detection.

Embodiments of this disclosure provide a fire detection method, a fire detection apparatus and electronic equipment, in which whether there exists a region where a fire occurs is detected in a predetermined number of consecutive frames of surveillance images based on a predetermined vector and Hu moments of fire candidate regions in the predetermined number of consecutive frames of surveillance images. Hence, fires may be detected accurately at nights, and influence of such factors as lamp light may be avoided.

According to a first aspect of the embodiments of this disclosure, there is provided a fire detection apparatus, which detects a fire according to a surveillance image, the apparatus including:

a first extracting unit configured to extract at least one group of fire candidate regions from a predetermined number of consecutive frames of surveillance images; wherein, a fire candidate region is extracted from each frame of surveillance images of the predetermined number of consecutive frames of surveillance images, to form the one group of fire candidate regions, a fire candidate region of the last frame of surveillance images of the predetermined number of consecutive frames of surveillance images in the one group of fire candidate regions overlapping with fire candidate regions of the rest frames of surveillance images;

a first calculating unit configured to calculate variance of directivity angles of a predetermined vector, variance of amplitudes of the predetermined vector and variance of Hu moments of each of the fire candidate regions; wherein, the predetermined vector is a vector connecting a position of a center of mass and a position of a highest point in each fire candidate region; and

a first judging unit configured to judge whether each group of fire candidate regions is regions where fires occur according to the variance of directivity angles of the predetermined vector, the variance of amplitudes of the predetermined vector and the variance of Hu moments.

According to a second aspect of the embodiments of this disclosure, there is provided a fire detection method, which detects a fire according to a surveillance image, the method including:

extracting at least one group of fire candidate regions from a predetermined number of consecutive frames of surveillance images; wherein, a fire candidate region is extracted from each frame of surveillance images of the predetermined number of consecutive frames of surveillance images, to form the one group of fire candidate regions, a fire candidate region of the last frame of surveillance images of the predetermined number of consecutive frames of surveillance images in the one group of fire candidate regions overlapping with fire candidate regions of the rest frames of surveillance images;

calculating variance of directivity angles of a predetermined vector, variance of amplitudes of the predetermined vector and variance of Hu moments of each of the fire candidate regions; wherein, the predetermined vector is a vector connecting a position of a center of mass and a position of a highest point in each fire candidate region; and judging whether each group of fire candidate regions is regions where fires occur according to the variance of directivity angles of the predetermined vector, the variance of amplitudes of the predetermined vector and the variance of Hu moments.

According to a third aspect of the embodiments of this disclosure, there is provided electronic equipment, including the fire detection apparatus as described in the first aspect of the embodiments of this disclosure.

An advantage of the embodiments of this disclosure exists in that fires may be detected accurately at nights, and influence of such factors as lamp light may be avoided.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof

Brief Description of the Drawings

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:

FIG. 1 is a schematic diagram of the fire detection apparatus of Embodiment 1 of this disclosure;
FIG. 2 is a schematic diagram of the first extracting unit of Embodiment 1 of this disclosure;
FIG. 3 is a schematic diagram of the first converting unit of Embodiment 1 of this disclosure;
FIG. 4 is a schematic diagram of a gray level histogram to which a frame of surveillance image corresponds of Embodiment 1 of this disclosure;
FIG. 5 is a flowchart of the fire detection method of Embodiment 2 of this disclosure;
FIG. 6 is a flowchart of a method for extracting a group of fire candidate regions of Embodiment 2 of this disclosure;
FIG. 7 is a flowchart of a method for converting a frame of surveillance image into a binary image of Embodiment 2 of this disclosure; and
FIG. 8 is a schematic diagram of a structure of the electronic equipment of Embodiment 3 of this disclosure.

Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

Embodiment 1

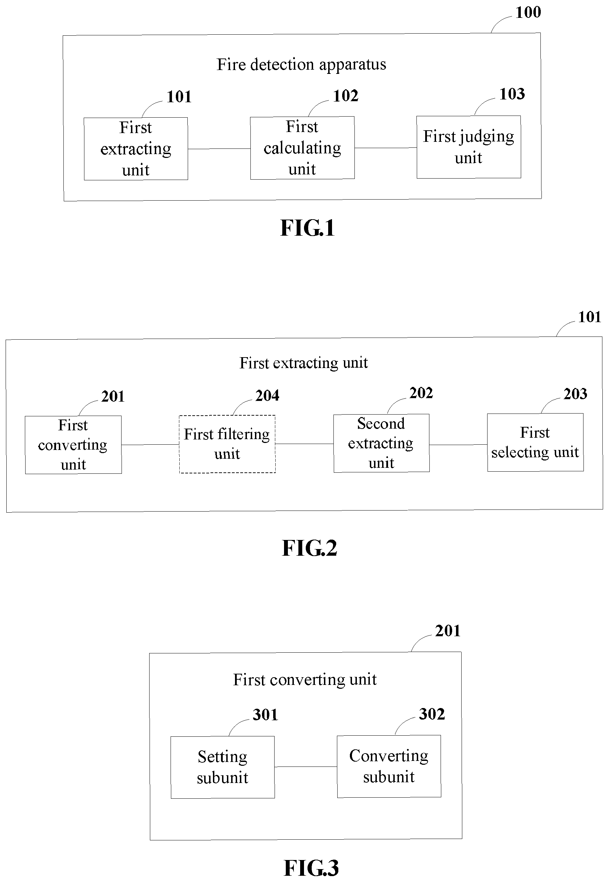

Embodiment 1 of this disclosure provides a fire detection apparatus, which detects a fire according to a surveillance image. FIG. 1 is a schematic diagram of the fire detection apparatus of Embodiment 1. As shown in FIG. 1, the fire detection apparatus 100 includes: a first extracting unit 101, a first calculating unit 102 and a first judging unit 103.

In this embodiment, the first extracting unit 101 is configured to extract at least one group of fire candidate regions from consecutive N frames of surveillance images. A fire candidate region is extracted from each frame of surveillance images of the consecutive N frames of surveillance images, to form the one group of fire candidate regions, a fire candidate region of the last frame of surveillance images of the consecutive N frames of surveillance images in the one group of fire candidate regions overlapping with fire candidate regions of the rest frames of surveillance images.

The first calculating unit 102 is configured to calculate variance of directivity angles of a predetermined vector, variance of amplitudes of the predetermined vector and variance of Hu moments of each of the fire candidate regions; wherein, the predetermined vector is a vector connecting a position of a center of mass and a position of a highest point in each fire candidate region. And the first judging unit 103 is configured to judge whether each group of fire candidate regions is regions where fires occur according to the variance of directivity angles of the predetermined vector, the variance of amplitudes of the predetermined vector and the variance of Hu moments. According to this embodiment, whether there exists a region where a fire occurs is detected in the consecutive N frames of surveillance images based on a predetermined vector and Hu moments of fire candidate regions in the consecutive N frames of surveillance images. Hence, fires may be detected accurately at nights, and influence of such factors as lamp light may be avoided.

In this embodiment, the surveillance image may be a grey level image, and may be obtained based on an image of a surveillance region captured by a video surveillance device. For example, if the image captured by a video surveillance device is a color image, it may be converted into a grey level image, to form the surveillance image; and if the image captured by a video surveillance device is a grey level image, it may be taken as the surveillance image.

In this embodiment, N is a natural number, and may be a number that is predefined. Any frame in the consecutive frames of surveillance image may be expressed as an *i-th* frame; where, 1≤i≤N; and when i=1, it denotes a first frame of surveillance image, and when i=N, it denotes an *N-th* frame of surveillance image, i.e., the last frame of surveillance image.

FIG. 2 is a schematic diagram of the first extracting unit of this embodiment. As shown in FIG. 2, the first extracting unit 101 includes a first converting unit 201, a second extracting unit 202 and a first selecting unit 203.

The first converting unit 201 may be configured to convert each frame of surveillance images of the predetermined number of consecutive frames of surveillance images into binary images; the second extracting unit 202 may be configured to extract connected regions of areas greater than or equal to a first threshold in each frame of binary images, and take them as first candidate regions in the frame of binary images; and the first selecting unit 203 may be configured to select the fire candidate regions from the first candidate regions in each frame of binary images, so as to constitute a group of fire candidate regions.

FIG. 3 is a schematic diagram of the first converting unit 201 of this embodiment. As shown in FIG. 3, the first converting unit 201 may include a setting subunit 301 and a converting subunit 302.

The setting subunit 301 may set a gray level threshold according to gray level values of pixels of each frame of surveillance images, and the converting subunit 302 may convert each frame of surveillance images into binary images according to the gray level threshold.

In this embodiment, for an *i-th* frame of surveillance image, the setting subunit 301 may accumulate sequentially the number of pixels to which each gray level value correspond in a descending order of the gray level values starting from a maximum value of the gray level values of the pixels in each frame of surveillance images, and take a minimum gray level value of the accumulated pixels as the gray level threshold when the accumulated number of the pixels reaches a predetermined value. The setting subunit 301 may set the gray level threshold according to a gray level histogram of the frame of surveillance image.

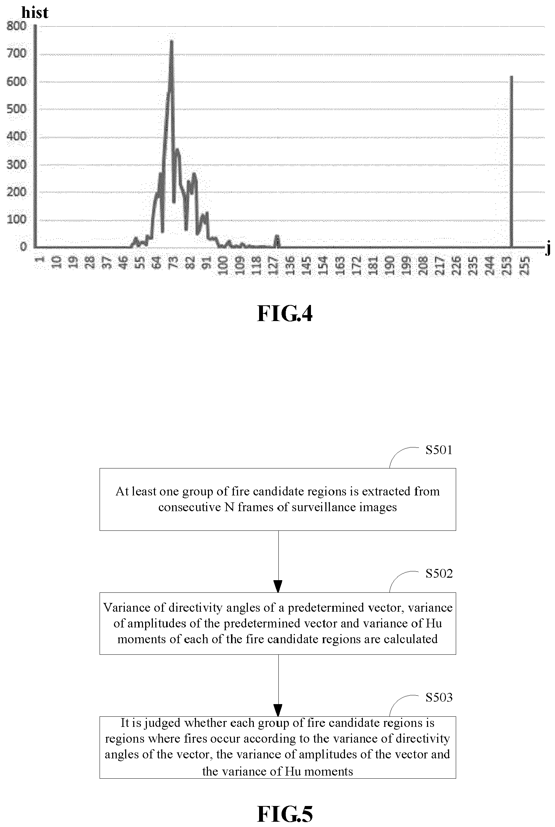

For example, FIG. 4 is a schematic diagram of the gray level histogram to which the frame of surveillance image corresponds. The horizontal coordinate denotes a gray level value j, and the vertical coordinate denotes the number hist(j) of pixels at the gray level value. The setting subunit 301 may accumulate the number of the pixels to which each gray level value correspond in the gray level histogram along the horizontal axis in a descending order of the gray level value j starting from the maximum value jmax of the gray level histogram. The setting subunit 301 may calculate the accumulated number f(x) of the pixels according to formula (1) below:

$$f(x) = \sum_{j=x}^{j\max} hist(j)$$

$$(1).$$

When the accumulated number f(x) of the pixels is greater than or equal to a predetermined value, a minimum gray level value x to which the accumulated pixels correspond is taken as the gray level threshold of the surveillance image. The maximum gray level value jmax may be, for example, 255, and the predetermined value may be, for example, five thousandth of a total sum of pixels in the surveillance image. Furthermore, if the minimum gray level value x is less than a predetermined lower limit value of the gray level threshold, the gray level threshold may be set to be the lower limit value; wherein, the lower limit value may be, for example, 128.

Of course, in this embodiment, the setting subunit 301 may also set the gray level threshold in other manners than what is described above.

In this embodiment, the converting subunit 302 may convert the *i-th* frame of surveillance images into binary images according to the gray level threshold set by the setting subunit 301. For example, if a gray level value of a pixel in the *i-th* frame of surveillance images is greater than or equal to the gray level threshold, the gray level value of the pixel may be set to be 255; and a gray level value of a pixel in the *i-th* frame of surveillance images is less than the gray level threshold, the gray level value of the pixel may be set to be 0, and the converting subunit 302 may set a gray level value for each pixel in the surveillance image, hence, the frame of surveillance images are converted into binary images.

In this embodiment, the consecutive N frames of surveillance images may be converted into corresponding consecutive N frames of binary images; wherein, the *i-th* frame of surveillance images are converted into an *i-th* frame of binary images.

In this embodiment, the second extracting unit 202 may extract the fire candidate regions from the binary images converted by the first converting unit 201. For example, the second extracting unit 202 may extract several connected regions constituted by consecutive pixels from the *i-th* frame of binary images, and take connected regions therein of areas exceeding the first threshold as first candidate regions in the *i-th* frame of binary images.

Furthermore, if no fire candidate region is extracted from the *i-th* frame of binary images, the first judging unit 103 may judge that there exists no region of fire in the *i-th* frame of binary images. And the fire detection apparatus 100 may take an *(i+1)-th* frame of surveillance images in current consecutive N frames of surveillance images as a first frame in a next group of consecutive N frames of surveillance images, and detect whether there exists a region of fire in the group of consecutive N frames of surveillance images.

In this embodiment, the first selecting unit 203 may select a first candidate region from the first candidate regions in each frame of binary images and take them as the fire candidate regions. Hence, N fire candidate regions are selected from the N frames of binary images, and the N fire candidate regions constitute a group of fire candidate regions.

In this embodiment, the first selecting unit 203 may select the N fire candidate regions in a group of fire candidate regions starting from the N-th frame of binary images.

For example, there are M first candidate regions in an N-th frame of binary images, and for a *k-th* first candidate region therein, the first selecting unit 203 may select a first candidate region from a *g-th* frame of binary images having overlapped pixels with the *k-th* first candidate region, and take it as a first candidate region in the *g-th* frame of binary images corresponding to the *k-th* first candidate region; where, 1≤k≤M, and 1≤g≤(N-1), both k and g being natural numbers. When first candidate regions corresponding to the *k-th* first candidate region are selected from the first to an *(N-1)-th* frames of binary images, the *k-th* first candidate region and the selected corresponding N-1 first candidate regions are all taken as the fire candidate regions. Hence, N first candidate regions are selected, which constitute a group of first candidate regions.

In this embodiment, the first selecting unit 203 may employ the same method as that described above to perform extraction on fire candidate regions for the first candidate regions in N frames of binary images, thereby constituting L groups of fire candidate regions; where, 1≤L≤M, L being a natural number.

Furthermore, if there are multiple first candidate regions in the *g-th* frame of binary images having pixels overlapping with the *k-th* first candidate region, a first candidate region having maximum overlapped pixel may be taken as the first candidate region in the *g-th* frame of binary images corresponding to the *k-th* first candidate region.

Furthermore, if any first candidate region in the *g-th* frame of binary images has no pixel overlapping with the *k-th* first candidate region, the *k-th* first candidate region is not extracted as a fire candidate region, and the first selecting unit 203 may proceed with performing extraction on fire candidate regions for a *(k+1)-th* first candidate region in the N-th frame of binary images.

Furthermore, if all the M first candidate regions in the N-th frame of binary images are not extracted as fire candidate regions, the first judging unit 103 may judge that there exists no fire region in the N-th frame of surveillance images, and the fire detection apparatus 100 may detect whether there exists a region of fire in a next group of consecutive N frames of surveillance images.

Furthermore, in this embodiment, as shown in FIG. 2, the first extracting unit 101 may further include a first filtering unit 204 configured to perform morphological filtering processing on the binary images converted by the first converting unit 201, and input the morphological filtering processed binary images into the second extracting unit 202. The morphological filtering processing may be, for example, an opening operation, and the relevant art may be referred to for a method of morphological filtering processing. In this embodiment, the first filtering unit 204 may eliminate noise points in the binary images, so that the processing by the extracting unit 202 is more accurate.

In this embodiment, the first calculating unit 102 and the first judging unit 103 may perform fire detection based on each group of fire candidate regions extracted by the first extracting unit 101.

For example, for each fire candidate region in p-th (where, 1≤p≤L, p being a natural number) groups of fire candidate regions extracted by the first extracting unit 101, the first calculating unit 102 may calculate the directivity angles and amplitudes of the vector constituted by the position of the center of mass Mc (Xmc, Ymc) and the position of the highest point Tc (Xtc, Ytc) of the fire candidate regions, and calculate the Hu moments of the fire candidate regions, the Hu moments being in a form of vectors. And for all the fire candidate regions in the *p-th* group of fire candidate regions, the first calculating unit 102 may respectively calculate the variance θ of directivity angles of the above vector, the variance r of amplitudes of the above vector and the variance h of the Hu moments. The relevant art may be referred to for methods of calculation of the position of the center of mass Mc (Xmc, Ymc), the position of the highest point Tc (Xtc, Ytc) and the Hu moments and methods of calculation of the variance, which shall not be described in this embodiment any further.

When the variance $\theta$ of directivity angles of the vector, the variance r of amplitudes of the vector and the variance h of Hu moments exceed respective thresholds $\theta_t$, $r_t$ and $h_t$, the first judging unit 103 may judge that the *p-th* group of fire candidate regions is the regions where fires occur.

In this embodiment, according to the variance of the directivity angles and the variance of the amplitudes of the vector constituted by the position of the center of mass Mc (Xmc, Ymc) and the position of the highest point Tc (Xtc, Ytc) of the fire candidate regions, a jitter characteristic of a fire may be detected, and according to the variance of the Hu moments of the fire candidate regions, a morphological changing characteristic of the fire may be detected. Hence, the fire detection apparatus of this embodiment may detect a fire based on a jitter characteristic and a morphological changing characteristic of the fire, thereby improving accuracy of the detection.

According to this embodiment, whether there exist regions where fires occur in the consecutive N frames of surveillance images may be detected based on the predetermined vector and Hu moments of the fire candidate regions in the consecutive N frames of surveillance images. Therefore, in comparison with a fire detection apparatus based on color information and texture information in an image, the fire detection apparatus of this embodiment may accurately detect a fire at night, and the fire detection apparatus of this embodiment is high in detection accuracy, and may avoid interference of such factors as lamp light, etc.

Embodiment 2

Embodiment 2 of this disclosure provides a fire detection method, corresponding to the fire detection apparatus of Embodiment 1.

FIG. 5 is a flowchart of the fire detection method of this embodiment. As shown in FIG. 5, the fire detection method includes:

step 501: at least one group of fire candidate regions is extracted from consecutive N frames of surveillance images;
step 502: variance of directivity angles of a predetermined vector, variance of amplitudes of the predetermined vector and variance of Hu moments of each of the fire candidate regions are calculated; wherein, the predetermined vector is a vector connecting a position of a center of mass and a position of a highest point in each fire candidate region; and
step 503: it is judged whether each group of fire candidate regions is regions where fires occur according to the variance of directivity angles of the predetermined vector, the variance of amplitudes of the predetermined vector and the variance of Hu moments.

In step 501, a fire candidate region is extracted from each frame of surveillance images of the consecutive N frames of surveillance images, to form the one group of fire candidate regions, a fire candidate region of the last frame of surveillance images of the predetermined number of consecutive frames of surveillance images in the one group of fire candidate regions overlapping with fire candidate regions of the rest frames of surveillance images.

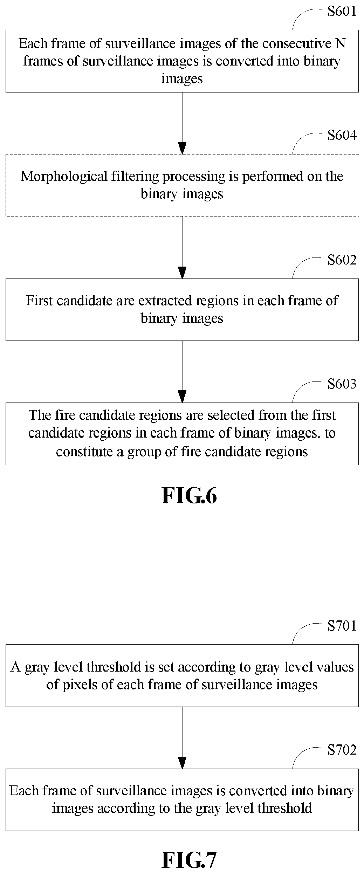

FIG. 6 is a flowchart of a method for extracting at least one group of fire candidate regions of this embodiment, which is used to carry out step 501, the method including:

step 601: each frame of surveillance images of the consecutive N frames of surveillance images is converted into binary images;
step 602: connected regions of areas greater than or equal to a first threshold in each frame of binary images are extracted, and the connected regions are taken as first candidate regions in the frame of binary images; and
step 603: the fire candidate regions are selected from the first candidate regions in each frame of binary images, to constitute a group of fire candidate regions.

Furthermore, between steps 601 and 602, step 604 may further be included:

step 604: morphological filtering processing is performed on the binary images.

FIG. 7 is a flowchart of a method for converting a frame of surveillance image into a binary image of this embodiment, which is used to carry out step 601, the method including:

step 701: a gray level threshold is set according to gray level values of pixels of each frame of surveillance images; and
step 702: each frame of surveillance images is converted into binary images according to the gray level threshold.

In step 701, the number of pixels to which the gray level values correspond is accumulated sequentially in a descending order of the gray level values starting from a maximum value of the gray level values of the pixels in each frame of surveillance images, and take a minimum gray level value of the accumulated pixels as the gray level threshold when the accumulated number of the pixels reaches a predetermined value.

In step 503, for example, when the variance of directivity angles of the predetermined vector, the variance of amplitudes of the predetermined vector and the variance of Hu moments exceed respective thresholds, the group of fire candidate regions is judged as the regions where fires occur.

Description of corresponding unit in Embodiment 1 may be referred to for detailed description of the above steps, which shall not be described herein any further.

According to this embodiment, whether there exist regions where fires occur in the consecutive N frames of surveillance images may be detected based on the predetermined vector and Hu moments of the fire candidate regions in the consecutive N frames of surveillance images. Therefore, in comparison with a fire detection apparatus based on color information and texture information in an image, the fire detection apparatus of this embodiment may accurately detect a fire at night, and the fire detection apparatus of this embodiment is high in detection accuracy, and may avoid interference of such factors as lamp light, etc.

Embodiment 3

Embodiment 3 of this disclosure provides electronic equipment, including the fire detection apparatus described in Embodiment 1.

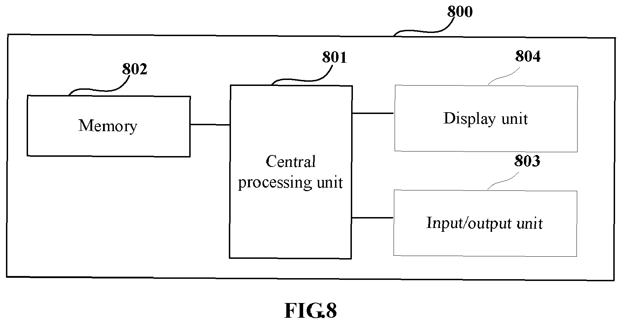

FIG. 8 is a schematic diagram of a structure of the electronic equipment of Embodiment 3 of this disclosure.

As shown in FIG. 8, the electronic equipment 800 may include a central processing unit (CPU) 801 and a memory 802, the memory 802 being coupled to the central processing unit 801. Wherein, the memory 802 may store various data, and furthermore, it may store a program for information processing, and execute the program under control of the central processing unit 801.

In an implementation, the functions of the fire detection apparatus may be integrated into the central processing unit 801.

The central processing unit 801 may be configured to:

extract at least one group of fire candidate regions from a predetermined number of consecutive frames of surveillance images; a fire candidate region is extracted from each frame of surveillance images of the predetermined number of consecutive frames of surveillance images, to form the one group of fire candidate regions, a fire candidate region of the last frame of surveillance images of the predetermined number of consecutive frames of surveillance images in the one group of fire candidate regions overlapping with fire candidate regions of the rest frames of surveillance images;

calculate variance of directivity angles of a predetermined vector, variance of amplitudes of the predetermined vector and variance of Hu moments of each of the fire candidate regions; the predetermined vector is a vector connecting a position of a center of mass and a position of a highest point in each fire candidate region; and

judge whether each group of fire candidate regions is regions where fires occur according to the variance of directivity angles of the predetermined vector, the variance of amplitudes of the predetermined vector and the variance of Hu moments.

The central processing unit 801 may further be configured to:

convert each frame of surveillance images of the predetermined number of consecutive frames of surveillance images into binary images;

extract connected regions of areas greater than or equal to a first threshold in each frame of binary images, and take them as first candidate regions in the frame of binary images; and

select the fire candidate regions from the first candidate regions in each frame of binary images, to constitute a group of fire candidate regions.

The central processing unit 801 may further be configured to:

set a gray level threshold according to gray level values of pixels of each frame of surveillance images; and convert each frame of surveillance images into binary images according to the gray level threshold.

The central processing unit 801 may further be configured to:

accumulate sequentially the number of pixels to which the gray level values correspond in a descending order of the gray level values starting from a maximum value of the gray level values of the pixels in each frame of surveillance images, and take a minimum gray level value of the accumulated pixels as the gray level threshold when the accumulated number of the pixels reaches a predetermined value.

The central processing unit 801 may further be configured to:

perform morphological filtering processing on the binary images before extracting the connected regions of areas greater than or equal to a first threshold in the binary images.

The central processing unit 801 may further be configured to:

when the variance of directivity angles of the predetermined vector, the variance of amplitudes of the predetermined vector and the variance of Hu moments exceed respective thresholds, the first judging unit judges that the group of fire candidate regions is the regions where fires occur.

Furthermore, as shown in FIG. 8, the electronic equipment 800 may include an input/output unit 803, and a display unit 804, etc. Wherein, functions of the above components are similar to those in the relevant art, and shall not be described herein any further. It should be noted that the electronic equipment 800 does not necessarily include all the parts shown in FIG. 8, and furthermore, the electronic equipment 800 may include parts not shown in FIG. 8, and the relevant art may be referred to.

An embodiment of the present disclosure provides a computer readable program code, which, when executed in a fire detection apparatus or electronic equipment, will cause the fire detection apparatus or the electronic equipment to carry out the fire detection method described in Embodiment 2.

An embodiment of the present disclosure provides a computer readable medium, including a computer readable program code, which will cause a fire detection apparatus or electronic equipment to carry out the fire detection method described in Embodiment 2.

The detection apparatus described with reference to the embodiments of this disclosure may be directly embodied as hardware, software modules executed by a processor, or a combination thereof For example, one or more functional block diagrams and/or one or more combinations of the functional block diagrams shown in FIGs. 1-3 may either correspond to software modules of procedures of a computer program, or correspond to hardware modules. Such software modules may respectively correspond to the steps in Embodiment 2. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIGs. 1-3 may be realized as a universal processor, a digital signal processor (DSP), an disclosure-specific integrated circuit (ASIC), a field programmable gate array (FPGA) or other programmable logic devices, discrete gate or transistor logic devices, discrete hardware component or any appropriate combinations thereof carrying out the functions described in this disclosure. And the one or more functional block diagrams and/or one or more combinations of the functional block diagrams shown in FIGs. 1-3 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

For implementations of the present disclosure containing the above embodiments, following supplements are further disclosed.

Supplement 1. A fire detection apparatus, which detects a fire according to a surveillance image, the apparatus including:

a first extracting unit configured to extract at least one group of fire candidate regions from a predetermined number of consecutive frames of surveillance images; wherein, a fire candidate region is extracted from each frame of surveillance images of the predetermined number of consecutive frames of surveillance images, to form the one group of fire candidate regions, a fire candidate region of the last frame of surveillance images of the predetermined number of consecutive frames of surveillance images in the one group of fire candidate regions overlapping with fire candidate regions of the rest frames of surveillance images;
a first calculating unit configured to calculate variance of directivity angles of a predetermined vector, variance of amplitudes of the predetermined vector and variance of Hu moments of each of the fire candidate regions; wherein, the predetermined vector is a vector connecting a position of a center of mass and a position of a highest point in each fire candidate region; and
a first judging unit configured to judge whether each group of fire candidate regions is regions where fires occur according to the variance of directivity angles of the predetermined vector, the variance of amplitudes of the predetermined vector and the variance of Hu moments.

Supplement 2. The fire detection apparatus according to supplement 1, wherein the first extracting unit includes:

a first converting unit configured to convert each frame of surveillance images of the predetermined number of consecutive frames of surveillance images into binary images;
a second extracting unit configured to extract connected regions of areas greater than or equal to a first threshold in each frame of binary images, and take them as first candidate regions in the frame of binary images; and
a first selecting unit configured to select the fire candidate regions from the first candidate regions in each frame of binary images, to constitute the one group of fire candidate regions.

Supplement 3. The fire detection apparatus according to supplement 2, wherein the first converting unit includes:

a setting subunit configured to set a gray level threshold according to gray level values of pixels of each frame of surveillance images; and
a converting subunit configured to convert each frame of surveillance images into binary images according to the gray level threshold.

Supplement 4. The fire detection apparatus according to supplement 3, wherein,
the setting subunit is configured to
accumulate sequentially the number of pixels to which each gray level value correspond in a descending order of the gray level values starting from a maximum value of the gray level values of the pixels in each frame of surveillance images, and take a minimum gray level value of the accumulated pixels as the gray level threshold when the accumulated number of the pixels reaches a predetermined value.
Supplement 5. The fire detection apparatus according to supplement 2, wherein the first extracting unit further includes:

a first filtering unit configured to perform morphological filtering processing on the binary images, and input the morphological filtering processed binary images into the second extracting unit.

Supplement 6. The fire detection apparatus according to supplement 1, wherein,
when the variance of directivity angles of the predetermined vector, the variance of amplitudes of the predetermined vector and the variance of Hu moments exceed respective thresholds, the first judging unit judges that the group of fire candidate regions is the regions where fires occur.
Supplement 7. Electronic equipment, including the fire detection apparatus as described in any one of supplements 1-6.
Supplement 8. A fire detection method, which detects a fire according to a surveillance image, the method including:

extracting at least one group of fire candidate regions from a predetermined number of consecutive frames of surveillance images; wherein, a fire candidate region is extracted from each frame of surveillance images of the predetermined number of consecutive frames of surveillance images, to form the one group of fire candidate regions, a fire candidate region of the last frame of surveillance images of the predetermined number of consecutive frames of surveillance images in the one group of fire candidate regions overlapping with fire candidate regions of the rest frames of surveillance images;
calculating variance of directivity angles of a predetermined vector, variance of amplitudes of the predetermined vector and variance of Hu moments of each of the fire candidate regions; wherein, the predetermined vector is a vector connecting a position of a center of mass and a position of a highest point in each fire candidate region; and judging whether each group of fire candidate regions is regions where fires occur according to the variance of directivity angles of the predetermined vector, the variance of amplitudes of the predetermined vector and the variance of Hu moments.

Supplement 9. The fire detection method according to supplement 8, wherein the extracting at least one group of fire candidate regions from a predetermined number of consecutive frames of surveillance images includes:

converting each frame of surveillance images of the predetermined number of consecutive frames of surveillance images into binary images;
extracting connected regions of areas greater than or equal to a first threshold in each frame of binary images, and taking them as first candidate regions in the frame of binary images; and
selecting the fire candidate regions from the first candidate regions in each frame of binary images, to constitute the one group of fire candidate regions.

Supplement 10. The fire detection method according to supplement 9, wherein the converting each frame of surveillance images into binary images includes:

setting a gray level threshold according to gray level values of pixels of each frame of surveillance images; and converting each frame of surveillance images into binary images according to the gray level threshold.

Supplement 11. The fire detection method according to supplement 10, wherein the setting a gray level threshold according to gray level values of pixels of each frame of surveillance images includes:

accumulating sequentially the number of pixels to which each gray level values correspond in a descending order of the gray level values starting from a maximum value of the gray level values of the pixels in each frame of surveillance images, and taking a minimum gray level value of the accumulated pixels as the gray level threshold when the accumulated number of the pixels reaches a predetermined value.

Supplement 12. The fire detection method according to supplement 9, wherein the fire detection method further includes:

performing morphological filtering processing on the binary images before extracting the connected regions of areas greater than or equal to a first threshold in the binary images.

Supplement 13. The fire detection method according to supplement 8, wherein the judging whether each group of fire candidate regions is regions where fires occur includes:

when the variance of directivity angles of the predetermined vector, the variance of amplitudes of the predetermined vector and the variance of Hu moments exceed respective thresholds, judging that the group of fire candidate regions is the regions where fires occur.

## Claims

1. A fire detection apparatus, which detects a fire according to a surveillance image, the apparatus comprising:

a first extracting unit configured to extract at least one group of fire candidate regions from a predetermined number of consecutive frames of surveillance images; wherein, a fire candidate region is extracted from each frame of surveillance images of the predetermined number of consecutive frames of surveillance images, to form the one group of fire candidate regions, a fire candidate region of the last frame of surveillance images of the predetermined number of consecutive frames of surveillance images in the one group of fire candidate regions overlapping with fire candidate regions of the rest frames of surveillance images;
a first calculating unit configured to calculate variance of directivity angles of a predetermined vector, variance of amplitudes of the predetermined vector and variance of Hu moments of each of the fire candidate regions; wherein, the predetermined vector is a vector connecting a position of a center of mass and a position of a highest point in each fire candidate region; and

a first judging unit configured to judge whether each group of fire candidate regions is regions where fires occur according to the variance of directivity angles of the predetermined vector, the variance of amplitudes of the predetermined vector and the variance of Hu moments.

2. The fire detection apparatus according to claim 1, wherein the first extracting unit comprises:

a first converting unit configured to convert each frame of surveillance images of the predetermined number of consecutive frames of surveillance images into binary images;
a second extracting unit configured to extract connected regions of areas greater than or equal to a first threshold in each frame of binary images, and take them as first candidate regions in the frame of binary images; and
a first selecting unit configured to select the fire candidate regions from the first candidate regions in each frame of binary images, to constitute the one group of fire candidate regions.

3. The fire detection apparatus according to claim 2, wherein the first converting unit comprises:

a setting subunit configured to set a gray level threshold according to gray level values of pixels of each frame of surveillance images; and
a converting subunit configured to convert each frame of surveillance images into binary images according to the gray level threshold.

4. The fire detection apparatus according to claim 3, wherein,
the setting subunit is configured to
accumulate sequentially the number of pixels to which each gray level value correspond in a descending order of the gray level values starting from a maximum value of the gray level values of the pixels in each frame of surveillance images,
and take a minimum gray level value of the accumulated pixels as the gray level threshold when the accumulated number of the pixels reaches a predetermined value.

5. The fire detection apparatus according to claim 2, wherein the first extracting unit further comprises:

a first filtering unit configured to perform morphological filtering processing on the binary images, and input the morphological filtering processed binary images into the second extracting unit.

6. The fire detection apparatus according to claim 1, wherein,
when the variance of directivity angles of the predetermined vector, the variance of amplitudes of the predetermined vector and the variance of Hu moments exceed respective thresholds, the first judging unit judges that the group of fire candidate regions is the regions where fires occur.

7. Electronic equipment, comprising the fire detection apparatus as described in any one of claims 1-6.

8. A fire detection method, which detects a fire according to a surveillance image, the method comprising:

extracting at least one group of fire candidate regions from a predetermined number of consecutive frames of surveillance images; wherein, a fire candidate region is extracted from each frame of surveillance images of the predetermined number of consecutive frames of surveillance images, to form the one group of fire candidate regions, a fire candidate region of the last frame of surveillance images of the predetermined number of consecutive frames of surveillance images in the one group of fire candidate regions overlapping with fire candidate regions of the rest frames of surveillance images;
calculating variance of directivity angles of a predetermined vector, variance of amplitudes of the predetermined vector and variance of Hu moments of each of the fire candidate regions; wherein, the predetermined vector is a vector connecting a position of a center of mass and a position of a highest point in each fire candidate region; and
judging whether each group of fire candidate regions is regions where fires occur according to the variance of directivity angles of the predetermined vector, the variance of amplitudes of the predetermined vector and the variance of Hu moments.

9. The fire detection method according to claim 8, wherein the extracting at least one group of fire candidate regions from a predetermined number of consecutive frames of surveillance images comprises:

converting each frame of surveillance images of the predetermined number of consecutive frames of surveillance images into binary images;

extracting connected regions of areas greater than or equal to a first threshold in each frame of binary images, and taking them as first candidate regions in the frame of binary images; and

selecting the fire candidate regions from the first candidate regions in each frame of binary images, to constitute the one group of fire candidate regions.

10. The fire detection method according to claim 9, wherein the converting each frame of surveillance images into binary images comprises:

setting a gray level threshold according to gray level values of pixels of each frame of surveillance images; and converting each frame of surveillance images into binary images according to the gray level threshold.

11. The fire detection method according to claim 10, wherein the setting a gray level threshold according to gray level values of pixels of each frame of surveillance images comprises:

accumulating sequentially the number of pixels to which each gray level values correspond in a descending order of the gray level values starting from a maximum value of the gray level values of the pixels in each frame of surveillance images, and taking a minimum gray level value of the accumulated pixels as the gray level threshold when the accumulated number of the pixels reaches a predetermined value.

12. The fire detection method according to claim 9, wherein the fire detection method further comprises:

performing morphological filtering processing on the binary images before extracting the connected regions of areas greater than or equal to a first threshold in the binary images.

13. The fire detection method according to claim 8, wherein the judging whether each group of fire candidate regions is regions where fires occur comprises:

when the variance of directivity angles of the predetermined vector, the variance of amplitudes of the predetermined vector and the variance of Hu moments exceed respective thresholds, judging that the group of fire candidate regions is the regions where fires occur.

100

Fire detection apparatus

101
First extracting unit

102
First calculating unit

103
First judging unit

**FIG.1**

101

First extracting unit

201
First converting unit

204
First filtering unit

202
Second extracting unit

203
First selecting unit

**FIG.2**

201

First converting unit

301
Setting subunit

302
Converting subunit

**FIG.3**

**FIG.4**

S501

At least one group of fire candidate regions is extracted from consecutive N frames of surveillance images

S502

Variance of directivity angles of a predetermined vector, variance of amplitudes of the predetermined vector and variance of Hu moments of each of the fire candidate regions are calculated

S503

It is judged whether each group of fire candidate regions is regions where fires occur according to the variance of directivity angles of the vector, the variance of amplitudes of the vector and the variance of Hu moments

**FIG.5**

S601

Each frame of surveillance images of the consecutive N frames of surveillance images is converted into binary images

S604

Morphological filtering processing is performed on the binary images

S602

First candidate are extracted regions in each frame of binary images

S603

The fire candidate regions are selected from the first candidate regions in each frame of binary images, to constitute a group of fire candidate regions

**FIG.6**

S701

A gray level threshold is set according to gray level values of pixels of each frame of surveillance images

S702

Each frame of surveillance images is converted into binary images according to the gray level threshold

**FIG.7**

800

802

801

804

Memory

Central
processing unit

Display unit

803

Input/output unit

**FIG.8**

**EUROPEAN SEARCH REPORT**

Application Number

EP 17 17 6575

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TUNG XUAN TRUONG ET AL: "Fire flame detection in video sequences using multi-stage pattern recognition techniques", ENGINEERING APPLICATIONS OF ARTIFICIAL INTELLIGENCE., vol. 25, no. 7, 1 October 2012 (2012-10-01), pages 1365-1372, XP055429075, GB ISSN: 0952-1976, DOI: 10.1016/j.engappai.2012.05.007 * abstract; figures 1-3 * * 3.1 Moving region detection * * 3.2 Color segmentation of fire using the FCM algorithm * * 3.3 Parameter extraction * ----- | 1-13 | INV. G06K9/00 |
| A | PAULO VINICIUS KOERICH BORGES ET AL: "A Probabilistic Approach for Vision-Based Fire Detection in Videos", IEEE TRANSACTIONS ON CIRCUITS AND SYSTEMS FOR VIDEO TECHNOLOGY, INSTITUTE OF ELECTRICAL AND ELECTRONICS ENGINEERS, USA, vol. 20, no. 5, 1 May 2010 (2010-05-01), pages 721-731, XP011304856, ISSN: 1051-8215 * equation 5 * ----- | 1-13 | |

TECHNICAL FIELDS SEARCHED (IPC)

G06K

-/--

The present search report has been drawn up for all claims

| Place of search | Date of completion of the search | Examiner |
|---|---|---|
| The Hague | 29 November 2017 | Meier, Ueli |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 3

Europäisches
Patentamt
European
Patent Office
Office européen
des brevets

**EUROPEAN SEARCH REPORT**

Application Number

EP 17 17 6575

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YINGHUI KONG ET AL: "An Identification Method of Abnormal Patterns for Video Surveillance in Unmanned Substation", POWER AND ENERGY ENGINEERING CONFERENCE (APPEEC), 2011 ASIA-PACIFIC, IEEE, 25 March 2011 (2011-03-25), pages 1-4, XP031939774, DOI: 10.1109/APPEEC.2011.5749005 ISBN: 978-1-4244-6253-7 * B. Moving objects detection * | 1-13 | |
| A | JUN-ZHE ZHOU ET AL: "Research on the Technology of Fire Detection Based on Image Processing in Unmanned Substation", INTELLIGENT NETWORKS AND INTELLIGENT SYSTEMS (ICINIS), 2010 3RD INTERNATIONAL CONFERENCE ON, IEEE, PISCATAWAY, NJ, USA, 1 November 2010 (2010-11-01), pages 108-111, XP031853990, ISBN: 978-1-4244-8548-2 * III. The extraction of the flame * | 1-13 | TECHNICAL FIELDS SEARCHED (IPC) |
| T | MORSE B S: "Lecture 4: Thresholding", INTERNET CITATION, 20 September 2006 (2006-09-20), pages 1-5, XP002548243, Retrieved from the Internet: URL:http://web.archive.org/web/20060920103023/http://morse.cs.byu.edu/650/lectures/lect04/thresholding.pdf [retrieved on 2009-09-29] * 4.4 Automated methods for finding thresholds * * 4.4.1 Known distribution * | | |

-/--

The present search report has been drawn up for all claims

| Place of search | Date of completion of the search | Examiner |
|---|---|---|
| The Hague | 29 November 2017 | Meier, Ueli |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 282 387 A1**

Europäisches
Patentamt

European
Patent Office

Office européen
des brevets

# EUROPEAN SEARCH REPORT

Application Number

EP 17 17 6575

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Anonymous: "c++ - Meaning of the seven Hu invariant moments function from OpenCV - Stack Overflow", , 10 July 2012 (2012-07-10), XP055429140, Retrieved from the Internet: URL:https://stackoverflow.com/questions/11 379947/meaning-of-the-seven-hu-invariant-m oments-function-from-opencv [retrieved on 2017-11-27] * the whole document * ----- | | |

TECHNICAL FIELDS
SEARCHED     (IPC)

The present search report has been drawn up for all claims

| Place of search | Date of completion of the search | Examiner |
|---|---|---|
| The Hague | 29 November 2017 | Meier, Ueli |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)